# EUROPÄISCHE PATENTSCHRIFT

(11) **EP 1 339 244 B1**
(45) Veröffentlichungstag und Bekanntmachung des Hinweises auf die Patenterteilung: **19.04.2006**
(21) Anmeldenummer: 03100289.2
(22) Anmeldetag: 11.02.2003
(51) Int. Cl.: H04Q 3/00

(54) **Verfahren zum netzübergreifenden Verbindungsaufbau und Netzübergangseinrichtung zur Realisierung des Verfahrens**
Method for setting up cross-network connections and gateway to implement the same
Méthode pour la création de connections interréseaux et passerelle pour sa mise en oeuvre

(30) Priorität: 25.02.2002 DE 10208048
(43) Veröffentlichungstag der Anmeldung: 27.08.2003
(73) Patentinhaber: SIEMENS AKTIENGESELLSCHAFT, 80333 München (DE)
(72) Erfinder: Pellert, Martin, 81477 München (DE)

(56) Entgegenhaltungen:
- EP-A- 0 999 712
- WO-A-00/62493
- US-A- 5 933 412

## Beschreibung

In zeitgemäßen Kommunikationssystemen sind Verbindungen, z.B. zur Sprach-, Video- und/oder Multimediakommunikation in vielen Fällen über mehrere als Transitnetze fungierende Kommunikationsnetze, wie z.B. lokale Netze (LAN) oder Weitverkehrsnetze (WAN) hinweg aufzubauen. Dabei wird häufig in einem jeweiligem Transitnetz ein anderes Verbindungsaufbauprotokoll verwendet, als in den Kommunikationsnetzen in denen sich Anfangs- oder Endpunkte einer Verbindung befinden.

Ein typischer Anwendungsfall ist beispielsweise ein Aufbau einer Schmalband-Nutzdatenverbindung, z.B. zur Echtzeit-Sprachkommunikation, über ein Breitbandnetz als Transitnetz. Zum Aufbau einer derartigen Schmalband-Nutzdatenverbindung ist eine Schmalbandsignalisierung gemäß einem Schmalband-Verbindungsaufbauprotokoll zwischen den Endpunkten der Verbindung zu übermitteln. Zur Verbindungsführung über das Breitbandnetz ist weiterhin eine Breitband-Nutzdatenverbindung über das Breitbandnetz mittels einer Breitband-Verbindungsaufbausignalisierung aufzubauen.

Gemäß dem bisherigen Stand der Technik wird eine solche Breitband-Nutzdatenverbindung vor dem Eintritt einer Schmalband-Verbindungsaufbaumeldung in das Breitbandnetz vollständig aufgebaut, um nach Bestätigung des Breitbandverbindungsaufbaus die Schmalband-Verbindungsaufbaumeldung über das Breitbandnetz in das Zielnetz zu übermitteln und so den Schmalband-Verbindungsaufbau fortzusetzen. Dieses Verfahren stellt sicher, dass die Breitband-Nutzdatenverbindung aufgebaut ist, wenn sie für die Übertragung der Schmalbandnutzdaten im Rahmen der Schmalband-Nutzdatenverbindung benötigt wird.

Die für den Aufbau der Schmalband-Nutzdatenverbindung zwischen den Verbindungsendpunkten benötigte Zeitdauer ergibt sich hierbei aus der Summe der Aufbauzeiten einer reinen Schmalband- und einer reinen Breitband-Nutzdatenverbindung. Gegenüber einer reinen Schmalband-Nutzdatenverbindung kann sich somit die Aufbauzeit einer über ein Transitnetz mit unterschiedlichem Verbindungsaufbauprotokoll führenden Verbindung erheblich verlängern. Diese Verlängerung kann sich insbesondere bei über mehrere oder eine Vielzahl von Transitnetzen führenden Verbindungen zu beträchtlichen Verzögerungen aufsummieren.

Ein anderes Beispeil ist aus dem Dokument US 5,933,412 bekannt.

Es ist Aufgabe der vorliegenden Erfindung ein Verfahren zum Aufbau einer netzübergreifenden Verbindung mittels einer netzübergreifend zu übertragenden Verbindungsaufbaumeldung anzugeben, das einen gegenüber dem Stand der Technik schnelleren Verbindungsaufbau über ein Transitnetz mit einem transitnetzspezifischen Verbindungsaufbauprotokoll erlaubt. Es ist weiterhin Aufgabe der Erfindung eine Netzübergangseinrichtung zur Realisierung des Verfahrens anzugeben.

Gelöst wird diese Aufgabe durch ein Verfahren mit den Merkmalen des Patentanspruchs 1, sowie durch eine Netzübergangseinrichtung mit den Merkmalen des Patentanspruchs 6.

Zum Aufbau einer netzübergreifenden Verbindung ist eine erste Verbindungsaufbaumeldung zu einem Verbindungsziel, z.B. einer Endeinrichtung, einer Vermittlungseinrichtung oder einem Netzknoten, über ein Transitnetz zu übertragen. Erfindungsgemäß wird durch Eintreffen der ersten Verbindungsaufbaumeldung an einer Eintrittsstelle in das Transitnetz, z.B. einer Brücke, einem sogenannten Gateway, einem sogenannten Router oder einer sogenannten Interworking-Unit, veranlasst, eine transitnetzspezifische, zweite Verbindungsaufbaumeldung zum Aufbau einer Transitnetzverbindung parallel zur ersten Verbindungsaufbaumeldung über das Transitnetz zu übermitteln. Zur Synchronisierung des Aufbaus der Transitnetzverbindung mit dem Aufbau der netzübergreifenden Verbindung wird die erste Verbindungsaufbaumeldung an einer Austrittsstelle aus den Transitnetz, z.B. einer Brücke, einem Gateway, einem Router oder einer Interworking-Unit, vor ihrer Weiterleitung zum Verbindungsziel mindestens bis zum Empfang der zweiten Verbindungsaufbaumeldung verzögert.

Zur Realisierung des Verfahrens kann an der Austrittsstelle aus dem Transitnetz eine erfindungsgemäße Netzübergangseinrichtung, wie z.B. eine Brücke, ein Gateway, ein Router, oder eine Interworking-Unit, angeordnet sein. Die Netzübergangseinrichtung weist transitnetzseitige Empfangsmittel zum Empfangen einer ersten Verbindungsaufbaumeldung zum Aufbau der netzübergreifenden Verbindung sowie einer zweiten Verbindungsaufbaumeldung zum Aufbau der Transitnetzverbindung auf. Die Netzübergangseinrichtung verfügt ferner über einen Speicher zum Zwischenspeichern der empfangenen, ersten Verbindungsaufbaumeldung sowie über Erkennungsmittel zum Erkennen, ob die empfangene zweite Verbindungsaufbaumeldung derselben Verbindung zugeordnet ist, wie die zwischengespeicherte, erste Verbindungsaufbaumeldung. Weiterhin umfasst die Netzübergangseinrichtung Ausgabemittel zum Weiterleiten der zwischengespeicherten, ersten Verbindungsaufbaumeldung zum Verbindungsziel nach Empfang einer derselben Verbindung zugeordneten, zweiten Verbindungsaufbaumeldung.

Ein wesentlicher Vorteil der Erfindung besteht darin, dass der Aufbau der netzübergreifenden Verbindung gegenüber dem Stand der Technik beträchtlich beschleunigt wird. Dies wird im Wesentlichen dadurch erreicht, dass vor der Übertragung der ersten Verbindungsaufbaumeldung über das Transitnetz nicht erst der vollständige Aufbau der Transitnetzverbindung abgewartet wird, sondern vielmehr die erste und die zweite Verbindungsaufbaumeldung zeitlich parallel über das Transitnetz übermittelt werden. Da die erste Verbindungsaufbaumeldung an der Austrittsstelle aus dem Transitnetz vor ihrer Weiterleitung mindestens bis zum Empfang der zweiten Verbindungsaufbaumeldung verzögert wird, kann dennoch mit großer Wahrscheinlichkeit gewährleistet werden, dass der Aufbau der Transitnetzverbindung im Wesentlichen abgeschlossen ist, wenn diese zur Verbindungsführung der netzübergreifenden Verbindung über das Transitnetz benötigt wird. Die Aufbauzeit für die netzübergreifende Verbindung ergibt sich im günstigsten Fall als das Maximum der Aufbauzeit einer reinen Transitnetzverbindung und der Aufbauzeit einer nicht über ein Transitnetz verlaufenden Verbindung.

Ein weiterer Vorteil der Erfindung ist darin zu sehen, dass zu deren Realisierung nur geringe Änderungen an bestehenden Kommunikationssystemen und insbesondere nur ein geringer Eingriff in eine Verbindungssignalisierung erforderlich sind. An Endpunkten der aufzubauenden netzübergreifenden Verbindung sind keinerlei Änderungen notwendig.

Vorteilhafte Ausführungsformen und Weiterbildungen der Erfindung sind in den abhängigen Ansprüchen angegeben.

Gemäß einer vorteilhaften Ausführungsform der Erfindung kann die erste Verbindungsaufbaumeldung über eine im Transitnetz aufgebaute Signalisierungstunnelverbindung übertragen werden. Die Signalisierungstunnelverbindung kann dabei vorab, z.B. als Festverbindung aufgebaut werden. Vorzugsweise können mehrere derartige Signalisierungstunnelverbindungen zwischen mehreren oder allen potentiellen Eintritts- und Austrittsstellen in das bzw. aus dem Transitnetz vorab aufgebaut werden. Über eine bereits aufgebaute Signalisierungstunnelverbindung kann die erste Verbindungsaufbaumeldung sehr schnell über das Transitnetz übertragen werden. Im Unterschied zu Nutzdatenverbindungen zur Echtzeitkommunikation können Signalisierungstunnelverbindungen in vielen Kommunikationsnetzen sehr kostengünstig als permanente Festverbindungen eingerichtet werden.

Die erste Verbindungsaufbaumeldung kann bis zum Empfang der zweiten Verbindungsaufbaumeldung durch eine an der Austrittsstelle angeordnete Netzübergangseinrichtung zwischengespeichert werden. Vorzugsweise kann die Netzübergangseinrichtung während die erste Verbindungsaufbaumeldung verzögert wird, anhand einer in dieser enthaltenen, verbindungsspezifischen Information eine oder mehrere verbindungsspezifische Einstellungen vornehmen. Auf diese Weise können beispielsweise Hardware- und/oder Softwareeinstellungen vorgenommen werden, die Übertragungs-, Verbindungs- und/oder Dienstgüteparameter betreffen. Gegebenenfalls kann die erste Verbindungsaufbaumeldung dabei abhängig vom Abschluss oder vom Verlauf einer derartigen Einstellung zusätzlich verzögert werden.

Nach einer weiteren Ausgestaltung der Erfindung kann als netzübergreifende Verbindung eine Schmalbandverbindung mittels einer Schmalband-Verbindungsaufbaumeldung als erster Verbindungsaufmeldung über ein Breitbandnetz als Transitnetz mittels einer Breitband-Verbindungsaufbaumeldung als zweiter Verbindungsaufmeldung aufgebaut werden.

Ein Ausführungsbeispiel der Erfindung wird nachfolgend anhand der Zeichnung näher erläutert.

Dabei zeigen jeweils in schematischer Darstellung:
Fig 1 ein Kommunikationssystem mit drei gekoppelten Kommunikationsnetzen beim Aufbau einer netzübergreifenden Verbindung,
Fig 2 eine erfindungsgemäße Netzübergangseinrichtung und
Fig 3 ein Ablaufdiagramm zur Veranschaulichung des Signalisierungsverkehrs beim Aufbau der netzübergreifenden Verbindung.

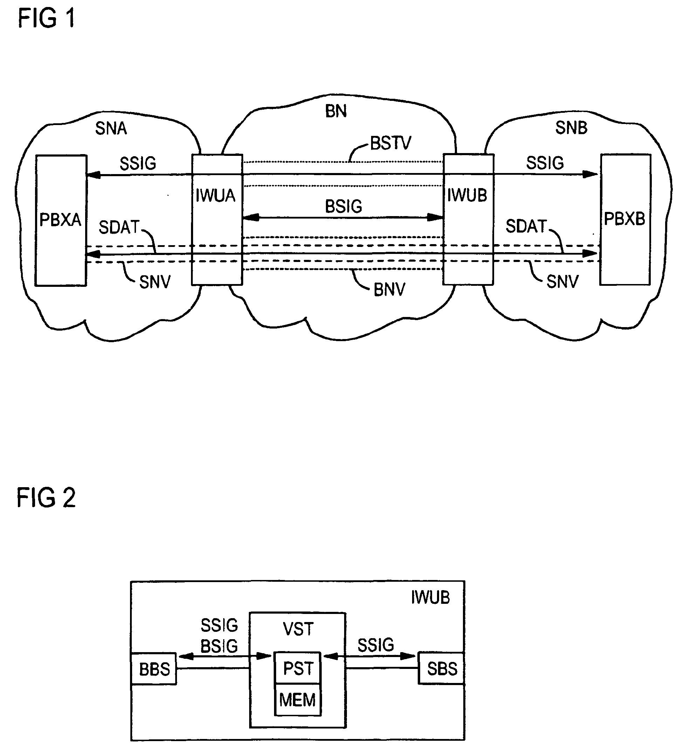

In **Figur 1** ist ein Kommunikationssystem mit zwei, beispielsweise zur Echtzeit-Sprachkommunikation vorgesehenen Schmalbandnetzen SNA und SNB schematisch dargestellt, die über ein Breitbandnetz BN als Transitnetz gekoppelt sind. Das Breitbandnetz BN kann dabei z.B. ein lokales Netz (LAN), ein Weitverkehrsnetz (WAN), das Internet, ein sogenanntes Backbone-Netz oder ein ATM-Netz (ATM: Asynchronous Transfer Mode) sein. Die Schmalbandnetze SNA und SNB können jeweils durch ein leitungsvermitteltes oder ein paketorientiertes Kommunikationsnetz realisiert sein, wobei letzteres einen Aufbau von gegebenenfalls virtuellen Verbindungen, z.B. gemäß ATM-Protokoll, MPLS-Protokoll (MPLS: Multi Protocol Label Switching) oder gemäß der ITU-T-Empfehlung H.323, erlauben soll.

Unter einem Verbindungsaufbau sei dabei allgemein ein Einrichten eines beliebigen Datenstroms verstanden.

Zum Aufbau von Nutzdatenverbindungen sind im Breitbandnetz BN ein Breitband-Verbindungsaufbauprotokoll und in den Schmalbandnetzen SNA und SNB jeweils ein Schmalband-Verbindungsaufbauprotokoll vorgesehen.

Es sei an dieser Stelle angemerkt, dass die Anwendung der Erfindung nicht auf die im Ausführungsbeispiel angegebene Kombination von Breitband- und Schmalbandnetzen beschränkt ist. Die Erfindung lässt sich vielmehr auf beliebige Kombinationen von verschiedene Verbindungsaufbauprotokolle aufweisenden Kommunikationsnetzen anwenden.

Das Breitbandnetz BN ist über eine Netzübergangseinrichtung IWUA an das Schmalbandnetz SNA und über eine Netzübergangseinrichtung IWUB an das Schmalbandnetz SNB gekoppelt. Die Netzübergangseinrichtungen IWUA und IWUB können hierbei z.B. jeweils durch eine Gateway-Einrichtung, eine sogenannte Interworking-Unit, eine Brücke oder eine Routereinrichtung realisiert sein. Im Schmalbandnetz SNA befindet sich eine Vermittlungseinrichtung PBXA von der aus im vorliegenden Ausführungsbeispiel eine netzübergreifende Schmalband-Nutzdatenverbindung SNV zu einer im Schmalbandnetz SNB befindlichen Vermittlungseinrichtung PBXB aufzubauen ist. Die aufzubauende Verbindung verläuft dabei aus dem Schmalbandnetz SNA über die Netzübergangseinrichtung IWUA als Eintrittsstelle in das Breitbandnetz BN und die Netzübergangseinrichtung IWUB als Austrittsstelle aus dem Breitbandnetz BN in das Schmalbandnetz SNB. Die Vermittlungseinrichtungen PBXA und PBXB können jeweils z.B. durch eine Nebenstellenanlage oder einen Netzknoten des Schmalbandnetzes SNA bzw. SNB realisiert sein. Alternativ dazu kann anstelle einer jeweiligen Vermittlungseinrichtung PBXA oder PBXB z.B. eine Kommunikationsendeinrichtung, ein Personalcomputer, eine Client-Anwendung oder ein Kommunikationsserver eingesetzt sein.

Der Aufbau der Schmalband-Nutzdatenverbindung SNV wird durch eine Schmalbandsignalisierung SSIG zwischen den Vermittlungseinrichtungen PBXA und PBXB im Rahmen des Schmalband-Verbindungsaufbauprotokolls initiiert. Die Schmalbandsignalisierung SSIG wird innerhalb einer zwischen den Netzübergangseinrichtungen IWUA und IWUB aufgebauten Breitband-Signalisierungstunnelverbindung BSTV über das Breitbandnetz BN übertragen. Die Breitband-Signalisierungstunnelverbindung BSTV ist in Figur 1 durch punktierte Linien angedeutet. Die Breitband-Signalisierungstunnelverbindung BSTV kann vorzugsweise vorab als Signalisierungs-Festverbindung zwischen den Netzübergangseinrichtungen IWUA und IWUB, z.B. als sog. AAL5-Verbindung (AAL: ATM Adaption Layer) aufgebaut werden. Das Einrichten einer Signalisierungs-Festverbindung ist in der Regel wesentlich kostengünstiger als ein Einrichten einer Nutzdaten-Festverbindung. Häufig ist sogar ein Einrichten von Signalisierungs-Festverbindungen zwischen mehreren oder allen an ein Breitbandnetz angekoppelten Netzübergangseinrichtungen hinsichtlich der anfallenden Kosten akzeptabel. Die Einrichtung einer solchen Signalisierungs-Festverbindung, hier BSTV, ist insofern vorteilhaft, als die Schmalbandsignalisierung SSIG sehr schnell über das Breitbandnetz BN übertragen werden kann.

Durch die Schmalbandsignalisierung SSIG werden die Netzübergangseinrichtungen IWUA und IWUB dazu veranlasst, zwischen ihnen eine Breitband-Nutzdatenverbindung BNV, z.B. eine sog. AAL1-Verbindung aufzubauen. Der Aufbau der Breitband-Nutzdatenverbindung BNV erfolgt mittels einer Breitbandsignalisierung BSIG im Rahmen des Breitband-Verbindungsaufbauprotokolls. In Figur 1 ist die Breitband-Nutzdatenverbindung BNV durch eng strichlierte Linien angedeutet.

Über die zwischen den Netzübergangseinrichtungen IWUA und IWUB aufgebaute Breitband-Nutzdatenverbindung BNV wird die zwischen den Vermittlungseinrichtungen PBXA und PBXB aufzubauende Schmalband-Nutzdatenverbindung SNV über das Breitbandnetz BN geführt. Durch das erfindungsgemäße Verfahren wird mit hoher Wahrscheinlichkeit gewährleistet, dass der Aufbau der Breitband-Nutzdatenverbindung BNV im Wesentlichen abgeschlossen ist, wenn diese zur Verbindungsführung der durch die Schmalbandsignalisierung SSIG initiierten Schmalband-Nutzdatenverbindung SNV benötigt wird. Nach Aufbau der Schmalband-Nutzdatenverbindung SNV werden schließlich Schmalband-Nutzdaten SDAT innerhalb der Schmalband-Nutzdatenverbindung SNV transparent zwischen den Vermittlungseinrichtungen PBXA und PBXB übertragen. Die Schmalband-Nutzdatenverbindung SNV ist in Figur 1 mittels strichlierter Linien angedeutet.

In **Figur 2** ist die erfindungsgemäße Netzübergangseinrichtung IWUB schematisch dargestellt. Die Netzübergangseinrichtung IWUB verfügt über eine Breitbandschnittstelle BBS zum Anschluss des Breitbandnetzes BN sowie über eine Schmalbandschnittstelle SBS zum Anschluss des Schmalbandnetzes SNB. Weiterhin weist die Netzübergangseinrichtung IWUB eine an die Schnittstellen BBS und SBS gekoppelte Verbindungssteuerung VST auf. Die Verbindungssteuerung VST umfasst eine Protokollsteuerung PST zur Verarbeitung sowohl des Schmalband- als auch des Breitband-Verbindungsaufbauprotokolls sowie einen mit der Protokollsteuerung PST gekoppelten Speicher MEM zum Speichern von Signalisierungsmeldungen.

Die Protokollsteuerung PST tauscht die Breitbandsignalisierung BSIG sowie die innerhalb der Breitband-Signalisierungstunnelverbindung BSTV übertragene Schmalbandsignalisierung SSIG über die Breitbandschnittstelle BBS mit dem Breitbandnetz BN aus. Über die Schmalbandschnittstelle SBS tauscht die Protokollsteuerung PST ferner die Schmalbandsignalisierung SSIG mit dem Schmalbandnetz SNB aus.

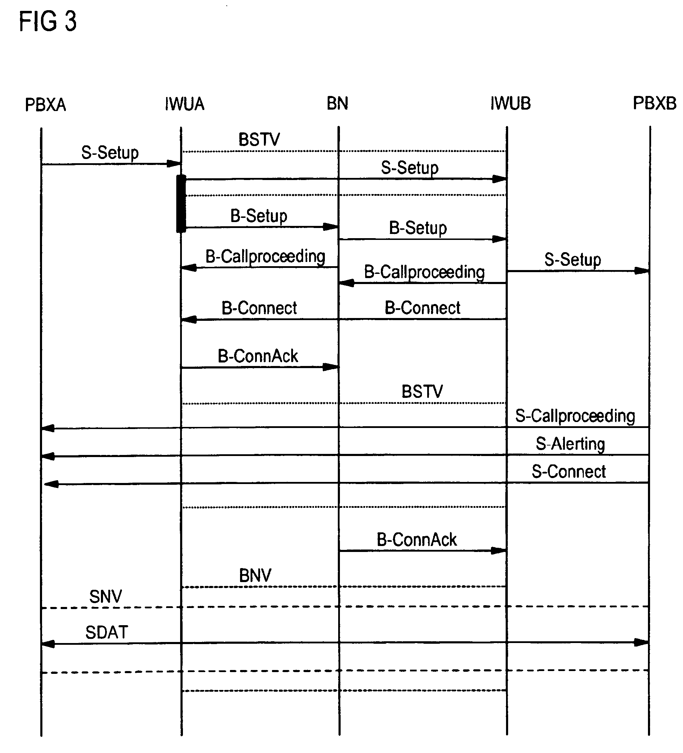

**Figur 3** zeigt ein Ablaufdiagramm zur Veranschaulichung des Signalisierungsverkehrs zwischen den Vermittlungseinrichtungen PBXA und PBXB sowie den Netzübergangseinrichtungen IWUA und IWUB zum Aufbau der Schmalband-Nutzdatenverbindung SNV.

Im vorliegenden Ausführungsbeispiel initiiert die Vermittlungseinrichtung PBXA den Aufbau der Schmalband-Nutzdatenverbindung SNV durch Übermitteln einer Schmalband-Verbindungsaufbaumeldung S-Setup zur Netzübergangseinrichtung IWUA im Rahmen der Schmalbandsignalisierung SSIG. Die Schmalband-Verbindungsaufbaumeldung S-Setup wird durch die Netzübergangseinrichtung IWUA nahezu unverzögert innerhalb der vorab aufgebauten Breitband-Signalisierungstunnelverbindung BSTV über das Breitbandnetz BN zur Netzübergangseinrichtung IWUB übermittelt. Die Netzübergangseinrichtung IWUB empfängt die Schmalband-Verbindungsaufbaumeldung S-Setup über die Breitbandschnittstelle BBS und führt sie der Protokollsteuerung PST zu. Diese leitet die empfangene Schmalband-Verbindungsaufbaumeldung S-Setup zunächst nicht weiter, sondern veranlasst deren Speicherung im Speicher MEM.

Durch den Empfang der Schmalband-Verbindungsaufbaumeldung S-Setup durch die Netzübergangseinrichtung IWUA wird weiterhin eine Übermittlung einer für das Breitbandnetz BN spezifischen Breitband-Verbindungsaufbaumeldung B-Setup zum Aufbau der Breitband-Nutzdatenverbindung BNV im Rahmen der Breitbandsignalisierung BSIG veranlasst. Die Breitband-Verbindungsaufbaumeldung B-Setup wird von der Netzübergangseinrichtung IWUA nahezu gleichzeitig und parallel mit der Schmalband-Verbindungsaufbaumeldung S-Setup in das Breitbandnetz BN übertragen. Die annähernde Gleichzeitigkeit des jeweiligen Absendens der Verbindungsaufbaumeldungen S-Setup und B-Setup durch die Netzübergangseinrichtung IWUA ist in Figur 3 durch einen die Verbindungsaufbaumeldungen S-Setup und B-Setup bei der Netzübergangseinrichtung IWUA verbindenden Balken angedeutet.

Die Breitband-Verbindungsaufbaumeldung B-Setup wird über das Breitbandnetz BN weiter zur Netzübergangseinrichtung IWUB übertragen und über deren Breitbandschnittstelle BBS zur Protokollsteuerung PST weitergeleitet. Weiterhin wird als Reaktion auf die Übermittlung der Breitband-Verbindungsaufbaumeldung B-Setup aus dem Breitbandnetz BN eine Breitband-Rufbearbeitungsmeldung B-Callproceeding zur Netzübergangseinrichtung IWUA übermittelt. Analog dazu sendet die Protokollsteuerung PST als Reaktion auf das Eintreffen der Breitband-Verbindungsaufbaumeldung B-Setup ihrerseits eine Breitband-Rufbearbeitungsmeldung B-Callproceeding in das Breitbandnetz BN, sowie eine Breitband-Verbindungseinleitungsmeldung B-Connect über das Breitbandnetz BN zur Netzübergangseinrichtung IWUA.

Die Protokollsteuerung PST überprüft nach Empfang der Breitband-Verbindungsaufbaumeldung B-Setup, ob diese der im Speicher MEM gespeicherten Schmalband-Verbindungsaufbaumeldung S-Setup zugeordnet ist. Die Prüfung erfolgt dabei vorzugsweise anhand einer in der Schmalband- und/oder in der Breitband-Verbindungsaufbaumeldung enthaltenen Verbindungsinformation. Falls eine derartige Zuordnung erkannt wird, wird die Schmalband-Verbindungsaufbaumeldung S-Setup aus dem Speicher MEM ausgelesen und über die als Ausgabemittel dienende Schmalbandschnittstelle SBS zur Vermittlungseinrichtung PBXB weitergeleitet.

Die Weiterleitung der Schmalband-Verbindungsaufbaumeldung S-Setup kann durch die Protokollsteuerung PST je nach den netzspezifischen zeitlichen Abstimmungserfordernissen auch bis zum Eintreffen einer Breitband-Einleitungsbestätigungsmeldung B-ConnAck oder bis zum Absenden der Breitband-Rufbearbeitungsmeldung B-Callproceeding oder der Breitband-Verbindungseinleitungsmeldung B-Connect verzögert bzw. durch diese Meldungen ausgelöst werden. Alternativ dazu können auch beliebige andere im Rahmen des Aufbaus der Breitband-Nutzdatenverbindung BNV bei der Netzübergangseinrichtung IWUB eintreffende bzw. von ihr abgehende Meldungen dazu genutzt werden, die Weiterleitung der Schmalband-Verbindungsaufbaumeldung S-Setup auszulösen oder zu verzögern.

Darüber hinaus kann die Weiterleitung der Schmalband-Verbindungsaufbaumeldung S-Setup zusätzlich bis zum Abschluss verbindungsspezifischer Einstellungen verzögert werden, die anhand einer in der zwischengespeicherten Schmalband-Verbindungsaufbaumeldung S-Setup enthaltenen, verbindungsspezifischen Information durch die Verbindungssteuerung VST vorgenommen werden.

Weiterhin kann für den Fall, dass die Breitband-Verbindungsaufbaumeldung B-Setup schneller über das Breitbandnetz BN übermittelt wird, als die Schmalband-Verbindungsaufbaumeldung S-Setup, vorgesehen sein, dass in der Netzübergangseinrichtung IWUB bei Eintreffen einer Breitband-Verbindungsaufbaumeldung eine dieser zugeordnete Empfangsinformation gespeichert wird. Falls dann eine der Breitband-Verbindungsaufbaumeldung zugeordnete Schmalband-Verbindungsaufbaumeldung nachfolgend bei der Netzübergangseinrichtung IWUB eintrifft, kann die Schmalband-Verbindungsaufbaumeldung bei Vorliegen der betreffenden Empfangsinformation unmittelbar, d.h. ohne Verzögerung zur Vermittlungseinrichtung PBXB weitergeleitet werden.

In allen oben genannten Fällen wird durch die Weiterleitung der Schmalband-Verbindungsaufbaumeldung S-Setup zum Verbindungsziel PBXB der Aufbau der Schmalband-Nutzdatenverbindung SNV fortgesetzt. Parallel dazu wird durch die von der Netzübergangseinrichtung IWUB zur Netzübergangseinrichtung IWUA übertragene Breitband-Verbindungseinleitungsmeldung B-Connect der weitere Aufbau der Breitband-Nutzdatenverbindung BNV veranlasst. Im Zuge dieses Aufbaus bestätigt die Netzübergangseinrichtung IWUA die empfangene Breitband-Verbindungseinleitungsmeldung B-Connect durch Übermittlung einer Breitband-Einleitungsbestätigungsmeldung B-ConnAck in das Breitbandnetz BN. Während die Breitband-Einleitungsbestätigungsmeldung B-ConnAck vom Breitbandnetz BN weiter zur Netzübergangseinrichtung IWUB übermittelt wird, sendet die Vermittlungseinrichtung PBXB infolge der empfangenen Schmalband-Verbindungsaufbaumeldung S-Setup eine Schmalband-Rufbearbeitungsmeldung S-Callproceeding, eine Schmalband-Rufmeldung S-Alerting sowie eine Schmalband-Verbindungseinleitungsmeldung S-Connect über die Breitband-Signalisierungstunnelverbindung BSTV zur Vermittlungseinrichtung PBXA. Die Schmalband-Nutzdatenverbindung SNV und die Breitband-Nutzdatenverbindung BNV werden somit zeitlich weitgehend parallel aufgebaut.

Nach der Übermittlung der Breitband-Einleitungsbestätigungsmeldung B-ConnAck zur Netzübergangseinrichtung IWUB ist der Aufbau der Breitband-Nutzdatenverbindung BNV zwischen den Netzübergangseinrichtungen IWUA und IWUB im Wesentlichen abgeschlossen. Über diese Breitband-Nutzdatenverbindung BNV wird dann die durch die Schmalband-Verbindungseinleitungsmeldung S-Connect eingeleitete Schmalband-Nutzdatenverbindung SNV zwischen den Vermittlungseinrichtungen PBXA und PBXB aufgebaut. Über diese Schmalband-Nutzdatenverbindung SNV können schließlich die Schmalband-Nutzdaten SDAT transparent zwischen den Vermittlungseinrichtungen PBXA und PBXB übertragen werden.

Anders als beim Stand der Technik wird die Schmalband-Verbindungsaufbaumeldung S-Setup nicht an der Eintrittsstelle IWUA in das Breitbandnetz BN sondern an der Austrittstelle IWUB aus dem Breitbandnetz BN verzögert. Aufgrund der unverzögerten und parallel zur Breitband-Verbindungsaufbaumeldung B-Setup erfolgenden Übertragung der Schmalband-Verbindungsaufbaumeldung S-Setup über das Breitbandnetz BN, wird der Schmalband-Verbindungsaufbau mit dem Breitband-Verbindungsaufbau zeitlich parallelisiert. Durch die Verzögerung der Schmalband-Verbindungsaufbaumeldung S-Setup an der Austrittsstelle IWUB wird der Schmalband-Verbindungsaufbau mit dem Breitband-Verbindungsaufbau derart synchronisiert, dass der Aufbau der Breitband-Nutzdatenverbindung BNV mit großer Wahrscheinlichkeit abgeschlossen ist, wenn diese für die Schmalband-Nutzdatenverbindung SNV benötigt wird. Um diese Wahrscheinlichkeit noch weiter zu erhöhen, können zusätzliche Verzögerungen oder anderweitige Maßnahmen vorgesehen werden. Insbesondere können Maßnahmen vorgesehen sein, um zu verhindern oder zumindest zu erkennen, dass die Schmalband-Verbindungsrückmeldungen S-Callproceeding, S-Alerting und/oder S-Connect die Breitband-Verbindungsrückmeldungen B-Callproceeding und B-Connect im Breitbandnetz BN überholen.

Die Aufbauzeit der netzübergreifenden Schmalband-Nutzdatenverbindung SNV ist beim erfindungsgemäßen Verfahren im Wesentlichen durch das Maximum der Aufbauzeiten einer reinen Breitband-Nutzdatenverbindung und einer reinen Schmalband-Nutzdatenverbindung gegeben. Dieses Maximum ist im Allgemeinen nur unwesentlich länger als die Aufbauzeit einer reinen Schmalband-Nutzdatenverbindung. Beim bisherigen Stand der Technik ist die Aufbauzeit für eine netzübergreifende Schmalband-Nutzdatenverbindung dagegen durch die Summe der Aufbauzeiten einer reinen Breitband-Nutzdatenverbindung und einer reinen Schmalband-Nutzdatenverbindung gegeben. Die vorliegende Erfindung erlaubt es somit, die Aufbauzeit für netzübergreifende Schmalband-Nutzdatenverbindungen gegenüber dem Stand der Technik ohne wesentlichen Zusatzaufwand beträchtlich zu verringern. Dieser Geschwindigkeitsvorteil ist um so ausgeprägter, je mehr Transitnetze sich zwischen den Vermittlungseinrichtungen PBXB und PBXB bzw. zwischen den Schmalbandnetzen SNA und SNB befinden.

## Patentansprüche

1. Verfahren zum Aufbau einer netzübergreifenden Verbindung (SNV) mittels einer zu einem Verbindungsziel (PBXB) zu übertragenden, ersten Verbindungsaufbaumeldung (S-Setup), wobei
a) durch Eintreffen der ersten Verbindungsaufbaumeldung (S-Setup) an einer Eintrittsstelle (IWUA) in ein Transitnetz (BN) veranlasst wird, eine transitnetzspezifische, zweite Verbindungsaufbaumeldung (B-Setup) zum Aufbau einer Transitnetzverbindung (BNV) parallel zur ersten Verbindungsaufbaumeldung (S-Setup) über das Transitnetz (BN) zu übermitteln, und wobei
b) an einer Austrittsstelle (IWUB) aus dem Transitnetz (BN) die erste Verbindungsaufbaumeldung (S-Setup) vor ihrer Weiterleitung zum Verbindungsziel (PBXB) mindestens bis zum Empfang der zweiten Verbindungsaufbaumeldung (B-Setup) verzögert wird.

2. Verfahren nach Anspruch 1,
**dadurch gekennzeichnet,**
**dass** die erste Verbindungsaufbaumeldung (S-Setup) über eine im Transitnetz (BN) aufgebaute Signalisierungstunnelverbindung (BSTV) übertragen wird.

3. Verfahren nach einem der vorhergehenden Ansprüche,
**dadurch gekennzeichnet,**
**dass** die erste Verbindungsaufbaumeldung (S-Setup) bis zum Empfang der zweiten Verbindungsaufbaumeldung (B-Setup) durch eine an der Austrittsstelle angeordnete Netzübergangseinrichtung (IWUB) zwischengespeichert wird.

4. Verfahren nach Anspruch 3,
**dadurch gekennzeichnet,**
**dass** die Netzübergangseinrichtung (IWUB) während die erste Verbindungsaufbaumeldung (S-Setup) verzögert wird, anhand einer in dieser enthaltenen, verbindungsspezifischen Information eine oder mehrere verbindungsspezifische Einstellungen vornimmt.

5. Verfahren nach einem der vorhergehenden Ansprüche,
**dadurch gekennzeichnet,**
**dass** als netzübergreifende Verbindung (SNV) eine Schmalbandverbindung mittels einer Schmalband-Verbindungsaufbaumeldung als erster Verbindungsaufbaumeldung (S-Setup) über ein Breitbandnetz (BN) als Transitnetz mittels einer Breitband-Verbindungsaufbaumeldung als zweiter Verbindungsaufbaumeldung (B-Setup) aufgebaut wird.

6. Netzübergangseinrichtung (IWUB) zum Aufbau einer netzübergreifenden Verbindung (SNV) aus einem Transitnetz (BN) zu einem Verbindungsziel (PBXB), mit
a) transitnetzseitigen Empfangsmitteln (BBS, PST) zum Empfangen einer ersten Verbindungsaufbaumeldung (S-Setup) zum Aufbau der netzübergreifenden Verbindung (SNV) sowie einer transitnetzspezifischen, zweiten Verbindungsaufbaumeldung (B-Setup) zum Aufbau einer Transitnetzverbindung (BNV),
b) einem Speicher (MEM) zum Zwischenspeichern der empfangenen, ersten Verbindungsaufbaumeldung (S-Setup),
c) Erkennungsmitteln (PST) zum Erkennen, ob die empfangene zweite Verbindungsaufbaumeldung (B-Setup) derselben Verbindung zugeordnet ist, wie die zwischengespeicherte, erste Verbindungsaufbaumeldung (S-Setup), und
d) Ausgabemitteln (SBS) zum Weiterleiten der zwischengespeicherten, ersten Verbindungsaufbaumeldung (S-Setup) zum Verbindungsziel (PBXB) nach Empfang einer derselben Verbindung zugeordneten, zweiten Verbindungsaufbaumeldung (B-Setup).

7. Netzübergangseinrichtung nach Anspruch 6,
**gekennzeichnet durch**
Einstellmittel (VST) zum Durchführen einer oder mehrerer verbindungsspezifischer Einstellungen anhand einer in der empfangenen ersten Verbindungsaufbaumeldung (S-Setup) enthaltenen, verbindungsspezifischen Information während der Zeitspanne zwischen Empfang und Weiterleiten der ersten Verbindungsaufbaumeldung (S-Setup).

## Claims

1. Method for setting up a connection (SNV), between networks, by means of a first connection setting-up message (S-Setup) which can be transmitted to a connection destination (PBXB), in which
a) the arrival of the first connection setting-up message (S-Setup) at an entry point (IWUA) to a transit network (BN) results in a transit-network-specific, second connection setting-up message (B-Setup) being transmitted in parallel with the first connection setting-up message (S-Setup) via the transit network (BN) in order to set up a transit network connection (BNV), and in which
b) at an exit point (IWUB) from the transit network (BN), the first connection setting-up message (S-Setup) is delayed before it is passed on to the connection destination (PBXB) at least until the second connection setting-up message (B-Setup) has been received.

2. Method according to Claim 1,
**characterized**
**in that** the first connection setting-up message (S-Setup) is transmitted via a signalling tunnel connection (BSTV) which is set up in the transit network (BN).

3. Method according to one of the preceding claims,
**characterized**
**in that** the first connection setting-up message (S-Setup) is buffer-stored by means of a network interworking device (IWUB), which is arranged at the exit point, until the second connection setting-up message (B-Setup) is received.

4. Method according to Claim 3,
**characterized**
**in that** the network interworking device (IWUB) carries out one or more connection-specific adjustments, while the first connection setting-up message (S-Setup) is delayed, on the basis of a connection-specific information item contained in it.

5. Method according to one of the preceding claims,
**characterized**
**in that** a narrowband connection is set up as the connection (SNV) between networks, by means of a narrowband connection setting-up message, as the first connection setting-up message (S-Setup) via a broadband network (BN) as the transit network, by means of a broadband connection setting-up message as the second connection setting-up message (B-Setup).

6. Network interworking device (IWUB) for setting up a connection (SNV) between networks from a transit network (BN) to a connection destination (PBXB), having
a) receiving means (BBS, PST) at the transit network end for receiving a first connection setting-up message (S-Setup) for setting up the connection (SNV) between networks, and a transit-network-specific second connection setting-up message (B-Setup) for setting up a transit network connection (BNV),
b) a memory (MEM) for buffer storage of the received, first connection setting-up message (S-Setup),
c) identification means (PST) for identifying whether the received connection setting-up message (B-Setup) is associated with the same connection as the buffer-stored, first connection setting-up message (S-Setup), and
d) output means (SBS) for passing on the buffer-stored, first connection setting-up message (S-Setup) to the connection destination (PBXB) after receiving a second connection setting-up message (B-Setup) which is associated with the same connection.

7. Network interworking device according to Claim 6,
**characterized by**
setting means (VST) for carrying out one or more connection-specific settings on the basis of a connection-specific information item which is contained in the received first connection setting-up message (S-Setup), during the time interval between receiving and passing on the first connection setting-up message (S-Setup).

## Revendications

1. Procédé pour établir une liaison au niveau du réseau (SNV) au moyen d'un premier message d'établissement de liaison (S-Setup) à transmettre à un objectif de liaison (PBXB), dans lequel
a) par l'arrivée du premier message d'établissement de liaison (S-Setup) en un point d'entrée (IWUA) dans un réseau de transit (BN), on demande de transmettre un second message d'établissement de liaison (B-Setup) spécifique au réseau de transit pour l'établissement d'une liaison de réseau de transit (BNV) parallèlement au premier message d'établissement de liaison (S-Setup) via le réseau de transit (BN), et dans lequel,
b) en un point de sortie (IWUB) du réseau de transit (BN), le premier message d'établissement de liaison (S-Setup) est retardé avant sa transmission à l'objectif de liaison (PBXB) au moins jusqu'à la réception du second message d'établissement de liaison (B-Setup).

2. Procédé selon la revendication 1,
**caractérisé en ce que**,
le premier message d'établissement de liaison (S-Setup) est transmis par une liaison de tunnel de signalisation (BSTV) établie dans le réseau de transit (BN).

3. Procédé selon l'une quelconque des revendications précédentes,
**caractérisé en ce que**
le premier message d'établissement de liaison (S-Setup) est mémorisé temporairement jusqu'à la réception du second message d'établissement de liaison (B-Setup) par un équipement passerelle (IWUB) disposé au point de sortie.

4. Procédé selon la revendication 3,
**caractérisé en ce que**
le dispositif passerelle (IWUB) est retardé pendant le premier message d'établissement de liaison (S-Setup) et effectue un ou plusieurs réglages spécifiques à la liaison à l'aide d'une information spécifique à la liaison et contenue dans ce message.

5. Procédé selon l'une quelconque des revendications précédentes,
**caractérisé en ce que**,
comme liaison au niveau du réseau (SNV), on établit une liaison à bande étroite au moyen d'un message d'établissement de liaison à bande étroite comme premier message d'établissement de liaison (S-Setup) au moyen d'un réseau à large bande (BN) sous la forme de réseau de transit au moyen d'un message d'établissement de liaison à large bande comme second message d'établissement de liaison (B-Setup).

6. Dispositif passerelle (IWUB) pour l'établissement d'une liaison (SNV) au niveau du réseau à partir d'un réseau de transit (BN) à un objectif de liaison (PBXB), comprenant
a) des moyens de réception (BBS, PST) côté réseau de transit pour la réception d'un premier message d'établissement de liaison (S-Setup) pour l'établissement de la liaison (SNV) au niveau du réseau et d'un second message d'établissement de liaison (S-Setup) spécifique au réseau de transit pour l'établissement d'une liaison du réseau de transit (BNV),
b) une mémoire (MEM) pour le stockage intermédiaire du premier message d'établissement de liaison (S-Setup) reçu,
c) des moyens d'identification (PST) pour reconnaître si le second message d'établissement de liaison (B-Setup) reçu est attribué à la même liaison que le premier message d'établissement de liaison (S-Setup) mémorisé temporairement, et
d) des moyens d'édition (SBS) pour l'acheminement du premier message d'établissement de liaison (S-Setup) mémorisé temporairement à l'objectif de liaison (PBXB) après la réception d'un second message d'établissement de liaison (B-Setup) attribué à la même liaison.

7. Dispositif passerelle selon la revendication 6,
**caractérisé par**
des moyens de réglage (VST) pour l'exécution d'un ou de plusieurs réglages spécifiques à la liaison à l'aide d'une information spécifique à la liaison et contenue dans le premier message d'établissement de liaison (S-Setup) reçu pendant le laps de temps s'écoulant entre la réception et l'acheminement du premier message d'établissement de liaison (S-Setup).
